# EUROPEAN PATENT APPLICATION

(11) **EP 3 964 347 A1**
(43) Date of publication of application: **09.03.2022**
(21) Application number: 21189327.6
(22) Date of filing: 03.08.2021
(51) Int. Cl.: B29C 48/92, G01B 13/06, B29C 48/10

(54) **CONTACTLESS FILM THICKNESS MEASURING DEVICE FOR PLASTIC FILM BLOWING MACHINE**

(30) Priority: 04.09.2020 TW 109130347
(71) Applicant: Nano-Trend Technology Co., Ltd., 221033 New Taipei City (TW)
(72) Inventor: YANG, JUI-CHIEN, 237011 New Taipei City (TW)
(74) Representative: Cabinet Chaillot

(57) **Abstract**

A contactless film thickness measuring device includes an air supply base fitted on around a sensor. The air supply base includes an air inlet passage and an air exhausting passage. The air inlet passage is connected to an air pressure source that supplies air. The supplied air blows toward a plastic film to form an air gap between a sensing end of the sensor and the plastic film. Extra air in the air gap is discharged from the film thickness measuring device via the air exhausting passage. The air inlet passage includes an annular air blowing groove located close to the sensing end. The supplied air flows through the annular air blowing groove to form an annularly distributed air flow blown toward the plastic film to maintain the air gap constant during the process of measuring the film thickness and avoid the sensor from directly contacting with the plastic film.

## Description

### FIELD OF THE INVENTION

The present invention relates to a contactless film thickness measuring device, and more particularly, to a contact less film thickness measuring device for plastic film blowing machine, with which an air gap is formed between the device and the plastic film by blowing air through an annular air blowing groove on the device.

### BACKGROUND OF THE INVENTION

Nowadays, plastic products have a very close relationship with people's daily life. Among others, plastic bags have become indispensable in most people's life. Plastic bags are often used by people to carry objects when they go shopping or bring some things with them outdoors. To produce the plastic bags, a plastic material is molten and then extruded using a screw rod to pass through a blown film die head of a plastic film blowing machine to produce a plastic film tube, a thickness of which is measured with a sensor. The plastic film tube can be finally formed into plastic bags of different sizes, different thicknesses and different shapes.

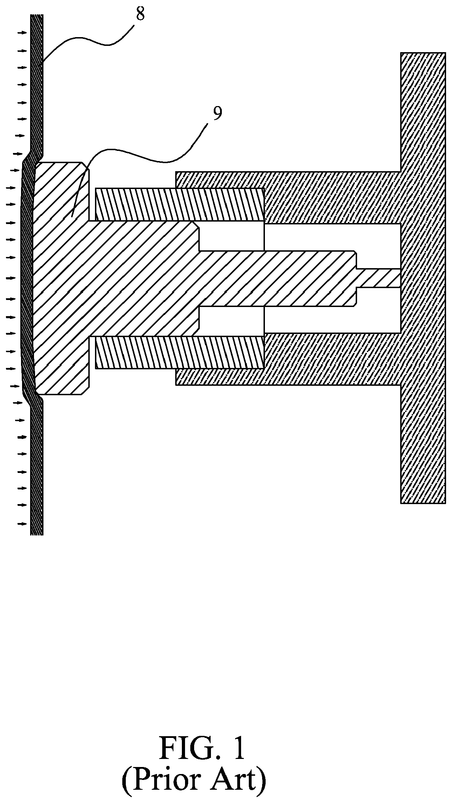

Please refer to Fig. 1. In a conventional method of measuring the thickness of a plastic film 8, a sensor 9 for thickness measuring is in direct contact with the plastic film 8. Since the plastic film 8 is continuously produced on the plastic film blowing machine, the sensor 9 is always in contact with the newly produced plastic film 8. Under this condition, the sensor 9 tends to have a reduced service life due to robbing against the plastic film 8. On the other hand, the newly produced plastic film 8 also tends to be scratched and damaged when being rubbed against the sensor 9.

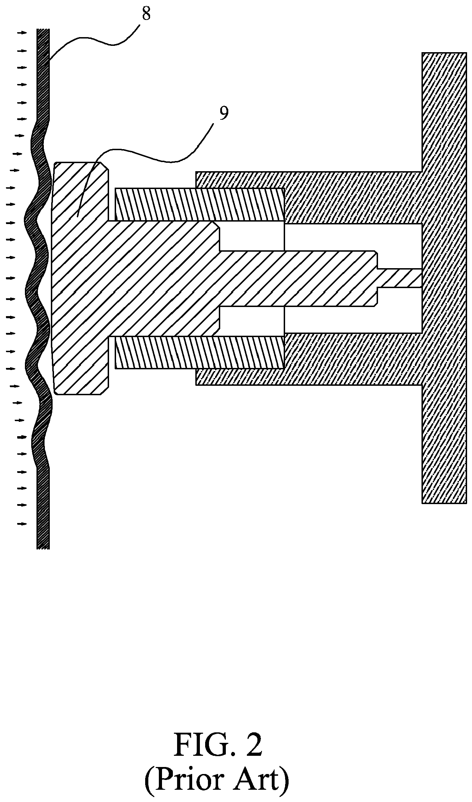

Please refer to refer to Fig. 2. In addition to the above-mentioned disadvantages caused by the rubbing between the plastic film 8 and the sensor 9, the conventional thickness measuring method also has the disadvantage of causing non-uniform thickness of the produced plastic film 8. This is because the surface of the sensor 9 in contact with the plastic film 8 forms a resistance to the plastic film 8 and results in vibration of the plastic film 8. The vibration of the plastic film 8 would adversely affect the accuracy of the thickness data measured by the sensor 9. Therefore, it would be helpful in increasing the thickness measuring precision if the direct contact of the sensor 9 with the plastic film 8 can be minimized.

### SUMMARY OF THE INVENTION

A primary object of the present invention is to provide a contactless film thickness measuring device for plastic film flowing machine, which can supply a continuous air flow when a sensor measures the thickness of a plastic film produced by a plastic film blowing machine, so that an air gap is formed between the sensor and the plastic film to prevent the sensor from directly contacting with the plastic film.

Another object of the present invention is to provide a contactless film thickness measuring device for plastic film flowing machine, with which supplied air can flow through an annular air blowing groove on the device to provide an annularly distributed air flow. The annularly distributed air flow is blown toward the plastic film to form an air gap between the device and the plastic film, and the air gap is maintained constant to reduce vibration of the plastic film during the process of measuring the film thickness.

A further object of the present invention is to provide a contactless film thickness measuring device for plastic film flowing machine, which includes an air inlet passage and an air exhausting passage for forming an air gap between a sensor of the device and a plastic film to be measured. The air gap is maintained constant by discharging extra air in the air gap via the air exhausting passage, so as to upgrade the precision of data measured by the sensor.

A still further object of the present invention is to provide a contactless film thickness measuring device for plastic film flowing machine, which can be differently configured to have a plurality of air exhausting holes respectively connected to a secondary air exhausting hole or to have a plurality of air exhausting holes commonly connected to one secondary air exhausting hole via an annular air exhausting groove, so as to increase the applications of the film thickness device.

To achieve the above and other objects, the contactless film thickness measuring device for plastic film flowing machine according to an embodiment of the present invention includes a sensor and an air supply base. The sensor includes a sensing end for measuring a thickness of a plastic film and a wire connecting end located opposite to the sensing end. The air supply base is fitted on around the sensor and includes an air inlet passage and an air exhausting passage. The air inlet passage is communicable with the sensing end and the wire connecting end and includes an annular air blowing groove located close to the sensing end. The air inlet passage is further connected at a location close to the wire connecting end to an air pressure source capable of supplying air. The air supplied by the air pressure source forms an annularly distributed air flow at the annular air blowing groove to be blown toward the plastic film, such that an air gap is formed between the sensing end and the plastic film. Extra air in the air gap is discharged from the film thickness measuring device via the air exhausting passage.

In an operable first embodiment, a mounting recess is provided in the air supply base for receiving the sensor, and an annular clearance is formed between an inner peripheral wall of the mounting recess and the sensor. The air inlet passage is separated from the mounting recess while the air exhausting passage is provided adjacent to the mounting recess to communicate with the annular clearance.

Further, the air exhausting passage includes a plurality of air exhausting holes that is communicable with an inner side of the annular clearance and an annular air exhausting groove that is communicable with the air exhausting holes. The annular air exhausting groove has a width larger than a diameter of the air exhausting holes.

Further, the annular clearance has a width generally equal to the diameter of the air exhausting holes.

In a second embodiment of the present invention, the air inlet passage includes a plurality of air spray holes communicable with the annular air blowing groove and an air inlet space communicable with the air spray holes. The annular air blowing groove has a width larger than a diameter of the air spray holes.

The air supply base includes a sleeve portion and a collar portion. The sleeve portion internally defines the mounting recess and has an annular curved wall radially outward and rearward extended from a rim of the mounting recess. The annular air blowing groove and the air spray holes are provided on the annular curved wall. The collar portion is fitted on around the sleeve portion, such that the air inlet space is defined among an inner peripheral wall of the mounting recess, the annular curved wall and the collar portion. And, the collar portion is provided with an air inlet communicable with the air inlet space.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a sectional side view showing a conventional thickness measuring device being used to measure a film thickness;
Fig. 2 is another sectional side view showing vibration of a film caused by a sensor of the conventional thickness measuring device when it is measuring the thickness of the film;
Fig. 3 is a perspective view of a film thickness measuring device according to a first embodiment of the present invention;
Fig. 4 is a sectional side view of the film thickness measuring device of Fig. 3 with an air pressure source connected thereto;
Fig. 5 is an exploded view of Fig. 3;
Fig. 6 is an enlarged view of the circled area of Fig. 4; and
Fig. 7 is a sectional side view of a film thickness measuring device according to a second embodiment of the present invention.

### DETAILED DESCRIPTION OF THE PREFERRED EMBODIMENTS

The present invention will now be described with some preferred embodiments thereof and by referring to the accompanying drawings. For the purpose of easy to understand, elements that are the same in the preferred embodiments are denoted by the same reference numerals.

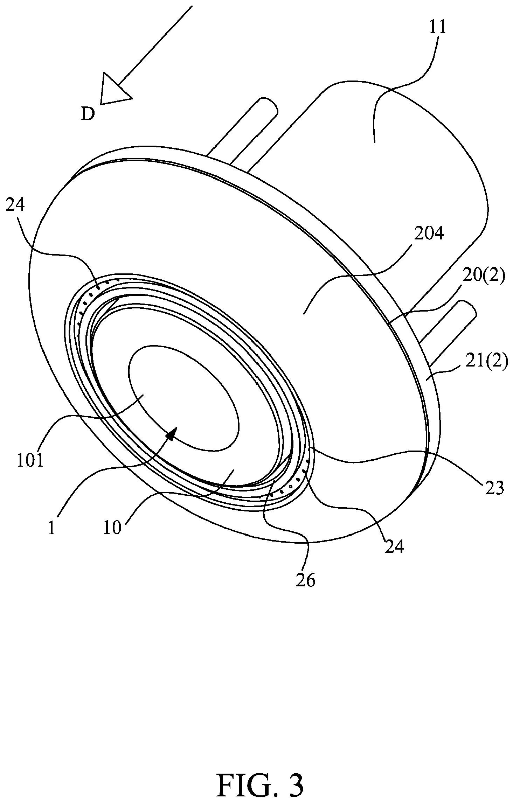

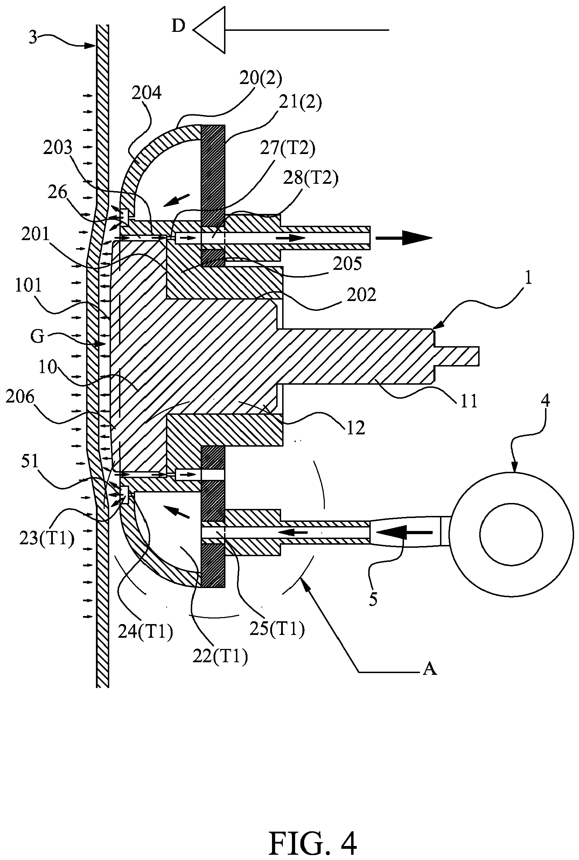

Please refer to Figs. 3 and 4. A contactless film thickness measuring device for plastic film blowing machine according to a first embodiment of the present invention includes a sensor 1 and an air supply base 2. The sensor 1 is mainly used to measure a thickness of a plastic film 3. For this purpose, the sensor 1 has to be moved toward the plastic film 3 in a measuring direction D. The air supply base 2 is connected to an air pressure source 4 that supplies air 5. An air flow 51 formed of the air 5 supplied by the air pressure source 4 is blown toward the plastic film 3 via the air supply base 2, such that an air gap G is formed between the plastic film 3 and the sensor 1.

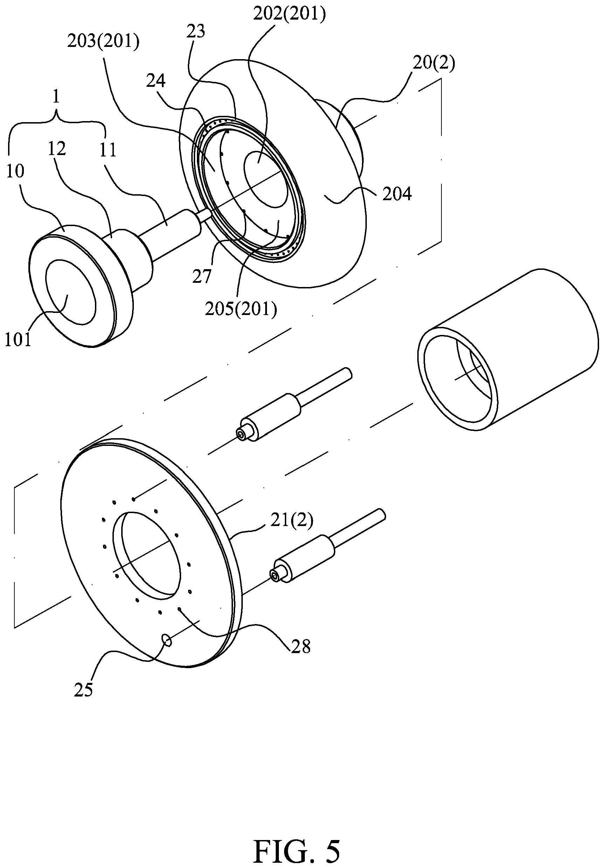

Please refer to Figs. 4 and 5. In the present invention, the sensor 1 has a sensing end 10 located downstream of the measuring direction D and a wire connecting end 11 located upstream of the measuring direction D, and a stepped cylindrical pipe section 12 is formed between the sensing end 10 and the wire connecting end 11. The sensing end 10 has a sensing surface 101 formed thereat without contacting with the plastic film 3. The wire connecting end 11 is connected to a computing element (not shown) for computing data measured by the sensor 1, so as to derive information about the thickness of the plastic film 3.

The air supply base 2 includes a sleeve portion 20 and a collar portion 21. The sleeve portion 20 internally defines a mounting recess 201, and a central area of the mounting recess 201 is formed into a rearward extended through bore 202. A front expanded part of the stepped cylindrical pipe section 12 is set in the mounting recess 201 while a rear narrowed part of the stepped cylindrical pipe section 12 is extended into the through bore 202 with a partial length projected beyond the through bore 202. The mounting recess 201 internally defines an inner peripheral wall 203. An annular curved wall 204 is radially outward extended from a rim of the inner peripheral wall 203 and is rearward extended to flush with a rear wall 205 of the mounting recess 201. The collar portion 21 has a central opening fitted on around the sleeve portion 20 and accordingly, is connected to and located on the annular curved wall 204 and the rear wall 205, such that the collar portion 21, the annular curved wall 204 and the inner peripheral wall 203 together define an air inlet space 22 among them.

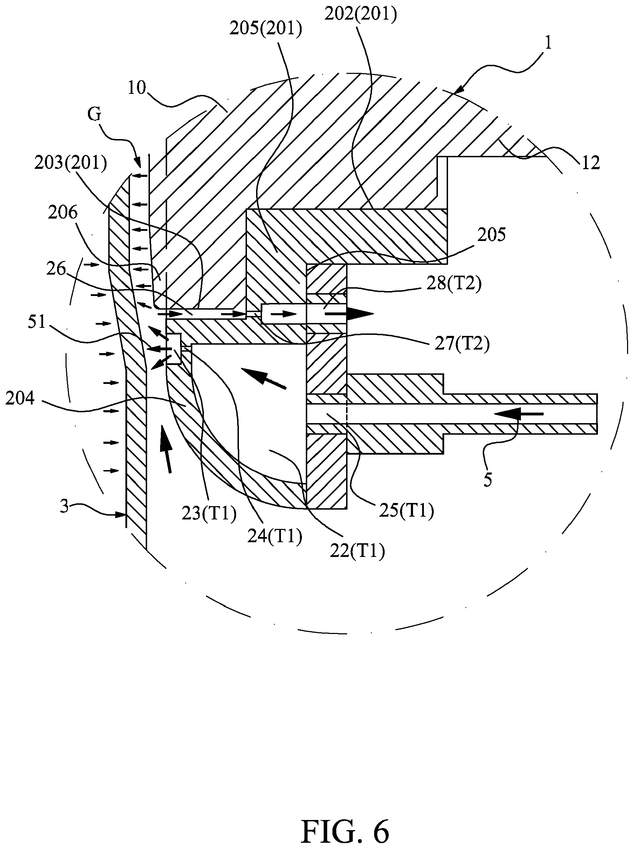

Please refer to Fig. 6. An annular air blowing groove 23 is formed on around the annular curved wall 204 close to the sensing end 10. The annular air blowing groove 23 is communicable with the air gap G and includes a plurality of air spray holes 24 communicating the air inlet space 22 with the annular air blowing groove 23. Further, the collar portion 21 is provided with an air inlet 25 communicating with the air inlet space 22. The annular air blowing groove 23, the air spray holes 24, the air inlet space 22 and the air inlet 25 together constitute an air inlet passage T1. The air supplied by the air pressure source 4 can enter the air inlet passage T1 to flow through the annular air blowing groove 23 and form an annularly distributed air flow 51 that is blown into the air gap G.

When the sensor 1 is mounted in the mounting recess 201, an annular clearance 26 is left between the sensor 1 and the inner peripheral wall 203 of the mounting recess 201. The rear wall 205 is provided with a plurality of air exhausting holes 27 that communicate with the annular clearance 26. The collar portion 21 is provided with a plurality of secondary air exhausting holes 28, which is located corresponding to the air exhausting holes 27. The air exhausting holes 27 and the secondary air exhausting holes 28 together constitute an air exhausting passage T2. A part of the air entered the air gap G flows into the annular clearance 26 and is discharged from the film thickness measuring device via the air exhausting passage T2, while the rest part of the air in the air gap G is discharged from the air gap G into surrounding environment.

As shown, the annular air blowing groove 23 has a width larger than a diameter of the air spray holes 24, such that the air 5 has a flow velocity that is reduced when the air flows from the air spray holes 24 into the annular air blowing groove 23 to supply a gentle, continuous and annularly distributed air flow 51 toward the plastic film 3. Further, the sensing surface 101 of the sensor 1 is protruded beyond an open end surface 206 of the mounting recess 201, so that the sensing surface 101 is located closer to the plastic film 3.

In the illustrated first embodiment, the air inlet passage T1 is provided at an outer side of the mounting recess 201 while the air exhausting passage T2 is provided in the mounting recess 201 to communicate with the annular clearance 26. However, it is understood the above arrangements are only illustrative and not intended to limit the designed position of the air exhausting passage T2 of the present invention. In other words, the air exhausting passage T2 can be otherwise provided between the mounting recess 201 and the air inlet passage T1. In the latter case, the air exhausting passage T2 is configured to extend through the rear wall (not shown).

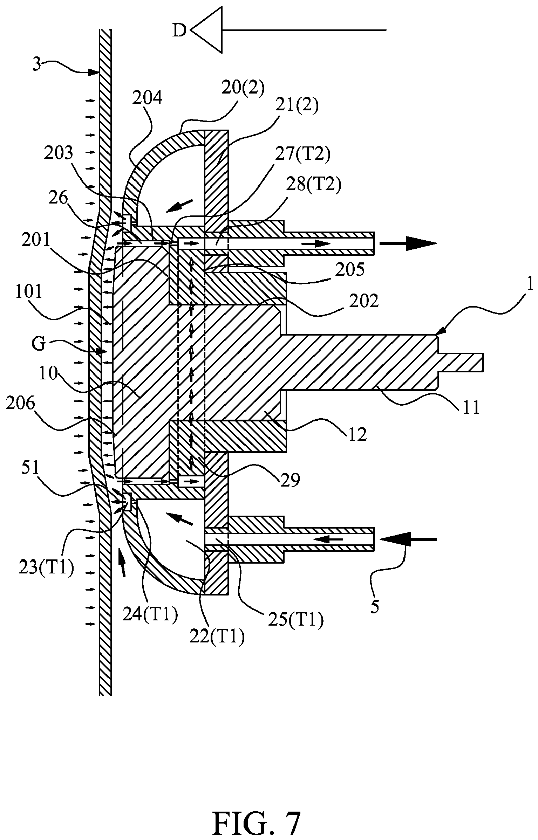

Please refer to Fig. 7, in which a second embodiment of the present invention is shown. The second embodiment is different from the first one in that the rear wall 205 in the second embodiment is provided with a plurality of air exhausting holes 27 communicating with the annular clearance 26 and an annular air exhausting groove 29 communicating with the air exhausting holes 27. The annular air exhausting groove 29 has a width larger than a diameter of the air exhausting holes 27, and the annular clearance 26 has a width generally equal to the diameter of the air exhausting holes 27. Further, in the second embodiment, the collar portion 21 needs only one secondary air exhausting hole 28 that is communicable with the annular air exhausting groove 29. In this case, the air exhausting holes 27, the annular air exhausting groove 29 and the secondary air exhausting hole 28 together constitute the air exhausting passage T2.

The present invention has been described with some preferred embodiments thereof and it is understood that many changes and modifications in the described embodiments can be carried out without departing from the scope and the spirit of the invention that is intended to be limited only by the appended claims.

## Claims

1. A contactless film thickness measuring device for plastic film blowing machine, comprising:
a sensor including a sensing end for measuring a thickness of a plastic film and a wire connecting end located opposite to the sensing end; and
an air supply base being fitted on around the sensor and including an air inlet passage and an air exhausting passage; the air inlet passage being communicable with the sensing end and the wire connecting end and including an annular air blowing groove located close to the sensing end, and the air inlet passage further being connected at a location close to the wire connecting end to an air pressure source capable of supplying air; the air supplied by the air pressure source forming an annularly distributed air flow at the annular air blowing groove to be blown toward the plastic film, such that an air gap is formed between the sensing end and the plastic film; and extra air in the air gap is discharged from the film thickness measuring device via the air exhausting passage.

2. The contactless film thickness measuring device for plastic film blowing machine as claimed in claim 1, wherein a mounting recess is provided in the air supply base for receiving the sensor, and an annular clearance is formed between an inner peripheral wall of the mounting recess and the sensor; the air inlet passage being separated from the mounting recess while the air exhausting passage being provided adjacent to the mounting recess to communicate with the annular clearance.

3. The contactless film thickness measuring device for plastic film blowing machine as claimed in claim 2, wherein the air exhausting passage includes a plurality of air exhausting holes communicable with an inner side of the annular clearance and an annular air exhausting groove communicable with the air exhausting holes; and the annular air exhausting groove having a width larger than a diameter of the air exhausting holes.

4. The contactless film thickness measuring device for plastic film blowing machine as claimed in claim 3, wherein the annular clearance has a width generally equal to the diameter of the air exhausting holes.

5. The contactless film thickness measuring device for plastic film blowing machine as claimed in claim 1, wherein the air inlet passage includes a plurality of air spray holes communicable with the annular air blowing groove and an air inlet space communicable with the air spray holes; and the annular air blowing groove having a width larger than a diameter of the air spray holes.

6. The contactless film thickness measuring device for plastic film blowing machine as claimed in claim 5, wherein the air supply base includes a sleeve portion and a collar portion; the sleeve portion internally defining a mounting recess and having an annular curved wall radially outward and rearward extended from a rim of the mounting recess, and the annular air blowing groove and the air spray holes being provided on the annular curved wall; the collar portion being fitted on around the sleeve portion, such that the air inlet space is defined among an inner peripheral wall of the mounting recess, the annular curved wall and the collar portion; and the collar portion being provided with an air inlet communicable with the air inlet space.
